# EUROPEAN PATENT SPECIFICATION

(11) **EP 3 848 241 B1**
(45) Date of publication and mention of the grant of the patent: **21.12.2022**
(21) Application number: 21153169.4
(22) Date of filing: 18.07.2017
(51) Int. Cl.: B60N 2/28, A44B 11/25

(54) **ANCHORING SYSTEM FOR A SAFETY BELT FOR USE WITH A CHILD SAFETY SEAT**
VERANKERUNGSSYSTEM FÜR EINEN SICHERHEITSGURT ZUR VERWENDUNG MIT EINEM KINDERSITZ
SYSTÈME D'ANCRAGE POUR UNE CEINTURE DE SÉCURITÉ DESTINÉ À ÊTRE UTILISÉ AVEC UN SIÈGE DE SÉCURITÉ POUR ENFANT

(43) Date of publication of application: 14.07.2021
(62) Divisional of application: 17001228.0
(73) Proprietor: BRITAX RÖMER Kindersicherheit GmbH, 89340 Leipheim (DE)
(72) Inventor: SCHMITZ, Michael, 89079 Ulm (DE); HENSELER, Richard, 89081 Ulm (DE); SCHEFFOLD, Thorsten, 89075 Ulm (DE); FÜRSTENBERG, Michael, 89079 Ulm (DE)
(74) Representative: Richardt Patentanwälte PartG mbB

(56) References cited:
- EP-A1- 3 031 664
- CA-A1- 2 806 574
- US-A1- 2004 155 451
- US-A1- 2013 099 536
- US-A1- 2015 306 988

## Description

The invention relates to an anchoring system for a safety belt for use with a child safety seat. In particular, the invention relates to an anchoring system that comprises different coupling devices adaptable to smaller children as well as older children.

Smaller children, such as babies or toddlers, are held firmly in their safety seat mounted on a passenger seat of a vehicle with a special child restraint system, such as an integrated harness system. For this age group, a safety seat with a 5-point harness using a harness buckle as a coupling device is the safest way to travel. The 5-point harness of the safety seat firmly secures shoulders and hips in the seat. For older children, however, an expanding demand for flexibility and movement should be met by the child restraint system.

Older children can use the 3-point adult seat belt with a highback booster seat, as this correctly positions the 3-point adult seat belt over the child's body. As a child moves around, however, the adult lap belt may not stay correctly positioned across the pelvic region. An additional safety belt clip coupled to a seating portion of the child safety seat and engaging with a lap portion of the 3-point safety belt can help to secure the lap portion of the safety belt across the pelvic region. The safety belt clip serves as a 4th anchor point to the standard 3-point adult passenger seat belt.

Such a safety belt clip is described in EP 3031664 A1. The safety belt clip comprises a guiding element with an engaging element and a positioning component. The positioning component is adapted to position the engaging element at a distance from the seating portion and the engaging element is adapted to engage with the lap portion of the 3-point safety belt. Furthermore, the guiding element is configured to drive the lap portion of the safety belt towards the pelvic region of an older child secured in the child safety seat with the 3-point safety belt. Combination child seats allow to combine different safety systems for smaller children and for older children in one seat. When used for a smaller child, the integral harness system of the combination child seat is used to secure the child. The integral harness may be either a 3-point or a 5-point harness. The 3-point harness comprises two shoulder straps. At one end portion of each shoulder strap there is connected a tongue adapted to engage with a harness buckle. The other ends of each shoulder strap are firmly coupled to the combination child seat. The 5-point harness comprises also two straps. One end of each strap is connected to the seating portion of the combination child seat. A buckle tongue is slideably connected to each strap. The buckle tongues are inserted into the harness buckle for securing the child. The portion of the strap running from the seating portion to the tongue is guided over the laps of the child. The portion of the straps running from the tongue to the backrest of the combination child seat is guided over the shoulders of the child. When the child gets older, it is secured in the combination child seat by the safety belt of the vehicle. Then, the integral harness system can be stowed away. The combination child seat can be used over a larger range of child's ages.

It is an object of the present invention to provide a combination of different safety systems for combination child seats.

This object is achieved by the anchoring system according to claim 1, by the insertion tongue according to claim 10, and by the combination coupling device of claim 13. Further advantageous embodiments of the present invention are indicated in claims 2 to 9, 11, 12, and 14, 15.

According to a first aspect of the invention there is provided an anchoring system for a child safety seat comprising a first coupling device adapted to engage with a harness of the child safety seat, a second coupling device adapted to engage with a safety belt of a vehicle, an anchoring means adapted to anchor the first and the second coupling device, and a storage system adapted to store at least one of the first coupling device or the second coupling device. The first coupling device is configured to be placed in a respective active position and in a respective inactive position, wherein in the active position the first coupling device is anchored by the anchoring system and placed in a position for engaging with the harness of the child safety seat, and wherein in the inactive position the first coupling device is stored in the storage system. The second coupling device is configured to be placed in a respective active position and in a respective inactive position, wherein in the active position the second coupling device is anchored by the anchoring system and placed in a position for engaging with the safety belt of the vehicle, and wherein in the inactive position the second coupling device is stored in the storage system. The anchoring system is configured to be installed in a seating portion of the child safety seat. Since each of the first and the second coupling device may be placed in an active and an inactive position, the child safety seat easily accommodates to smaller children as well as older children and has an extended life cycle. For smaller children, the anchoring system is used with the first coupling device in the active position for engaging with the harness of the child safety seat. In this case, the second coupling device may be stored in the storage system. Older children are too tall to be secured with the integral harness system of the child safety seat. In this case, the anchoring system is used with the second coupling device in the active position. The first coupling device may be stored in the storage system, thus, being in the inactive position. In this configuration, a child may be secured by the safety belt of the vehicle. The safety belt of the vehicle engages in this case with the second coupling device. This ensures that the lap portion of the safety belt is secured properly across the pelvic region of the child. The storage system allows for an easy storage of at least one of the first or second coupling device. Since the storage system is part of the anchoring system, storage room for the coupling device which is not in use is readily available. It is not necessary to store the inactive, i.e., not used, coupling device or devices in a place remote from the active coupling device. Because of this, the risk that one of the coupling devices gets lost is reduced. Since the anchoring system is configured to be installed in a seating portion of the child safety seat, all operations for changing from the configuration with an active first coupling device to a configuration with an active second coupling device - and vice versa - are in the viewing field of a user. That means that there is easy access to the coupling device to be transferred into active position, and it is easy to stow the coupling device to be transferred into inactive position. The range of the aforementioned operations is limited to a small spatial range. Furthermore, the child safety seat cannot be used if the coupling devices are not correctly placed in active or inactive positions. The misplacement of the coupling devices or wrong storage of the coupling devices have immediate adverse effects on the seating portion of the child safety seat. These would hinder the user from placing a child into the child safety seat.

Preferably, the anchoring system is configured such that the first coupling device is in the active position when the second coupling device is in the inactive position; and the anchoring system is configured such that the second coupling device is in the active position when the first coupling device is in the inactive position. The effect is that the user is induced to always use one of the safety systems and secure the child in the child safety seat.

Advantageously, the storage system is adapted to store both the first and the second coupling device at the same time. Preferably, the storage system comprises two pockets; the first pocket is adapted to store the first coupling device, the second pocket is adapted to store the second coupling device. The advantage of storing both the first and second coupling device in the storage system is that the child safety seat may be used as a highback booster seat for older children. In this case, the child is secured with the safety belt of the vehicle. For older children, the use of a second coupling device, such as a safety belt clip, may not be necessary anymore. The storage system which as adapted to store both coupling devices together has the further advantage that the risk that any of the coupling devices gets lost is reduced when the child safety seat is used as a highback booster seat without the second coupling device / safety belt clip.

Alternatively, the storage system is adapted to store only either one of the first or second coupling device at the same time. Since the storage system is adapted to store either the first or the second coupling device the user is induced to apply at least one coupling device and secure the child in the safety seat by anchoring either the harness of the child safety seat or the safety belt of the vehicle. Furthermore, the size of the storage system is reduced.

Advantageously, the first coupling device and the second coupling device are coupled by a coupling mechanism such that moving the first coupling device into the active position causes the second coupling device being moved into the inactive position, and vice versa. Preferably, the coupling mechanism is adapted to drive the first coupling device into the active position when the second coupling device is moved into the inactive position, and to drive the second coupling device into the active position when the first coupling device is moved into the inactive position. Preferably, the coupling mechanism comprises a pull element, advantageously a belt, a wire or a chain, or a thrust element or a leverage. This has the advantage that moving one coupling device automatically moves the other coupling device in the opposite direction. Since displacement of both coupling devices is coupled by the coupling mechanism, the movement of one coupling by the user is sufficient for bringing the other one in the correct position. The handling of the anchoring system is easier and faster.

Advantageously, the anchoring means comprises a rail system, wherein the first coupling device and the second coupling device are each transferable along the rail system between the respective active position and the respective inactive position. Preferably, the rail system comprises a first rail and a second rail, wherein the first rail is adapted to anchor only the first coupling device and the second rail is adapted to anchor only the second coupling device. Rails have the advantage that the coupling devices stay connected to the rail system. The risk that the inactive coupling devices get lost is highly reduced. Furthermore, rails facilitate the shifting of the coupling devices from the active to the inactive position and vice versa. The handling becomes more intuitive. Furthermore, it is ensured that the first coupling device is placed in the correct position. It is further ensured that the second coupling device is placed in the correct position. Since the first coupling device is adapted to be used with the harness system of the child safety seat, the anchoring system with the active first coupling device is preferably used for smaller children. The active second coupling device is used for older children. It is, therefore, further advantageous that the active first coupling device is positioned closer to the backrest of the child safety seat than the active second coupling device when the anchoring system of the invention is used in a child safety seat. As the children grow, they occupy more space on the seating area of the child safety seat. Therefore, it is advantageous that the active second coupling device is positioned further away from the backrest of the child safety seat than the active first coupling device. This allows to accommodate for the different sizes and ages of the child occupying the child safety seat equipped with the anchoring system of the invention.

It is also possible that the anchoring means / rail system comprises one rail which is adapted to anchor the first and the second coupling device. This has the advantage of an easier production process of the child safety seat.

In an alternative, the anchoring means comprises one or more slots. Preferably, the anchoring means comprises two slots, a first slot adapted to anchor the first coupling device and a second slot adapted to anchor the second coupling device. The first or second coupling device may be anchored in the anchoring means by hinging it into the respective slots. It is also possible that one slot is used which is adapted to anchor both the first and second coupling device.

Advantageously, the first coupling device is a harness buckle adapted to engage with a tongue of the harness of the child safety seat, and the second coupling device is a safety belt clip adapted to engage with a lap portion of the safety belt of the vehicle seat. This has the advantage that smaller children are secured by engaging the 5-point safety belt of the child safety seat in the harness buckle, and older children are secured by engaging the lap portion of the 3-point safety belt of the vehicle seat in the safety belt clip.

Preferably, the anchoring system further comprises at least one lid adapted to cover the storage system. The at least one lid ensures, when in closed position, that the seating area of the child safety seat is fully covered. That is, when the child safety seat is used with the anchoring system of the invention, the comfort of the child sitting in the child safety seat is not influenced by the storage system. Advantageously, the first or the second coupling device is locked in the active position when the at least one lid is closed. Preferably, the at least one lid locks the first or second coupling device in the active position against side movement. This has the advantage that the active coupling device is secured and is not displaced unintentionally. Furthermore, the user is induced to close the at least one lid of the storage system in order to use the child safety seat comfortably and thus secure the coupling device in its active position. If the storage system comprises two or more pockets, then the anchoring system preferably comprises two or more lids, each adapted to cover a respective pocket.

Advantageously, the anchoring means is configured such that the active position of the first coupling device is distant from the active position of the second coupling device to accommodate for children of different age and size. This configuration of the anchoring means takes into account the different sizes and ages of the children. While the configuration with an active first coupling device is used for smaller children, the configuration with the second coupling device is used for older children. In particular, when the anchoring system is installed in a child safety seat, the placement of the second coupling device further distant from the backrest of the child safety seat than the first coupling device gives older children sufficient space on the seating portion of the child safety seat.

Advantageously, the coupling devices may have different lengths to accommodate for children of different age and size. Preferably, the second coupling device is longer than the first coupling device. This also gives more flexibility and space to the older child. Furthermore, the coupling devices advantageously comprise adjustment means, such as for example adjustable straps that may be included in the adjustment means to accommodate children of different age and size. An advantage is that the safety belt is adjustable to the child providing better comfort and protection.

According to another aspect of the present invention there is provided an insertion tongue, adapted to be inserted into a coupling device for anchoring a harness of a child safety seat, comprising an engaging element and a coupling element, wherein the engaging element is adapted to engage with the lap portion of a safety belt of a vehicle, and the coupling element is adapted to engage with the coupling device. The coupling device for anchoring the harness of a child safety seat is preferably a harness buckle of a harness system. Preferably, the insertion tongue is configured as a safety belt clip adapted to be inserted into the harness buckle. An advantage is that the coupling device does not need to be dismounted and stowed away in order for the child safety seat to be used with the safety belt of the vehicle. Since the insertion tongue may be inserted in the coupling device, no cumbersome conversions of the child seat are necessary. It is sufficient to insert the insertion tongue into the coupling device. In this configuration, the child safety seat can still be used even for older children. The coupling element of the insertion tongue is preferably a latch. The coupling element may be inserted in the coupling device. The coupling device preferably comprises a slot for receiving the coupling element of the insertion tongue. The engaging element of the insertion tongue is adapted to receive the lap portion of the safety belt of the vehicle. Because of this, the engaging element ensures that the lap portion of the safety belt is properly guided across the pelvic region of the occupant of the child safety seat. The insertion tongue is advantageously configured to be removed from the coupling device by activating a release button of the coupling device. Advantageously, the insertion tongue is configured to be adjusted by rotation or linear movement. This allows for an adaptation of the insertion tongue to the geometry of the safety belt and to the size and age of the occupant.

A further advantage of the insertion tongue according to the invention is that useful life of the child safety seat is extended and the child safety seat can be used over a larger range of child's ages without replacing the harness buckle that is anchored on the seating surface. Another advantage is that the safety belt clip may be arranged at a higher position than the harness buckle better accommodating the taller size of older children.

Advantageously, the insertion tongue is secured to the child safety seat by a flexible element. An advantage is that the insertion tongue is attached permanently close to the coupling device. It will not get lost as easily.

According to another aspect of the present invention there is provided a combination coupling device for a child safety seat comprising a fixation element for coupling the combination coupling device to the child safety seat, and a coupling device, wherein the coupling device is adapted to engage with a tongue of a harness system of the child safety seat, and further adapted to engage with a lap portion of a safety belt of a vehicle seat. An advantage is that both a coupling device adapted to engage with the harness of a child safety seat, and a coupling device adapted to engage with a safety belt of a vehicle, are integrated into one combination coupling device. There is, thus, no need to exchange, store, displace or activate different coupling devices.

Advantageously, the coupling device is a harness buckle adapted to engage with a buckle tongue of the harness of the child safety seat, and the coupling device comprises an integrated safety belt clip adapted to engage with a lap portion of the safety belt of the vehicle seat. Preferably, the coupling device comprises a slot for receiving the tongue of the harness. An advantage is that both the harness buckle of the child safety seat and the safety belt clip engaging with the lap portion of the safety belt of the vehicle seat are integrated into one device.

Advantageously, the combination coupling device is configured to be adjusted by rotation or linear movement. This allows for an adaptation of the combination coupling device to the geometry of the safety belt and to the size and age of the occupant. Preferably, when used in a child safety seat, this allows for bringing the combination coupling device closer to the occupant of a child safety seat. Further, this allows for an adjustment of the geometry of both the harness and of the safety belt of the vehicle depending on the size and age of the child.

Advantageously, the combination coupling device further comprises a release button for releasing the tongue upon activation, wherein the safety belt clip is integrated in the release button of the harness buckle. This allows to release the harness or the safety belt straightforwardly with a single grasp, for example, to take the child out of the seat in case of an emergency of after an accident.

Advantageously, the harness buckle comprises a protective lid to prevent dirt or dust from entering the harness buckle. An advantage is that there is less dirt or dust entering the harness buckle that may otherwise be unprotected. This is particularly advantageous when the safety belt clip of the combination coupling device is used. In this configuration, the integral harness of the child safety seat may be stowed away. The slot for the insertion of the harness tongue would remain open if no lid were used.

Another aspect of the invention relates to a child safety seat comprising the anchoring system of the invention, the insertion tongue of the invention, or the combination coupling device of the invention.

Specific embodiments of the invention will now be described by way of example and with reference to the accompanying drawings, in which:
Figure 1 shows a child safety seat with an active harness buckle;
Figure 2a shows a harness buckle;
Figure 2b shows a safety belt clip;
Figure 2c shows a first embodiment of the anchoring system of the invention;
Figure 2d shows the anchoring system of the first embodiment in a configuration with an active harness buckle;
Figure 2e shows the anchoring system of the invention in a configuration with an active safety belt clip;
Figure 3a shows a second embodiment of the anchoring system of the invention in a configuration with an active harness buckle in an anchoring means;
Figure 3b shows the anchoring system in the configuration of Fig. 3a with open storage system;
Figure 3c shows the anchoring system in a configuration with an active safety belt clip with open storage system;
Figure 3d shows the anchoring system in the configuration of Fig. 3c with closed storage system;
Figure 4a shows an alternative embodiment of the anchoring system with an active harness buckle;
Figure 4b shows the alternative embodiment of the anchoring system of Fig. 4a with an active safety belt clip;
Figure 5a shows a coupling mechanism with an active harness buckle;
Figure 5b shows a coupling mechanism with an active safety belt clip;
Figures 6a, b, c show a variant of the rail system and the storage system with one rail and two pockets;
Figures 6d, e show the variant of the rail and storage system of Figures 6a, b, c comprising a coupling mechanism;
Figures 7a, b, c show a further variant of the rail system and the storage system with two rails and two pockets;
Figures 7d, e show the variant of the rail and storage system of Figures 7a, b, c comprising a coupling mechanism;
Figures 8a, b show a further variant of the rail system and the storage system with a Y-shaped rail system and one pocket;
Figures 8c, d show the variant of the rail and storage system of Figures 8c, d comprising a coupling mechanism;
Figures 9a, b, c show a variant of the rail system and the storage system with a Y-shaped rail system and two pockets;
Figure 10a shows conventional buckle tongues of a harness system of a child safety seat;
Figure 10b shows the insertion tongue of the invention;
Figure 11a shows a combination coupling device engaged with a child safety harness;
Figure 11b shows a combination coupling device engaged with a lap portion of a seat belt.

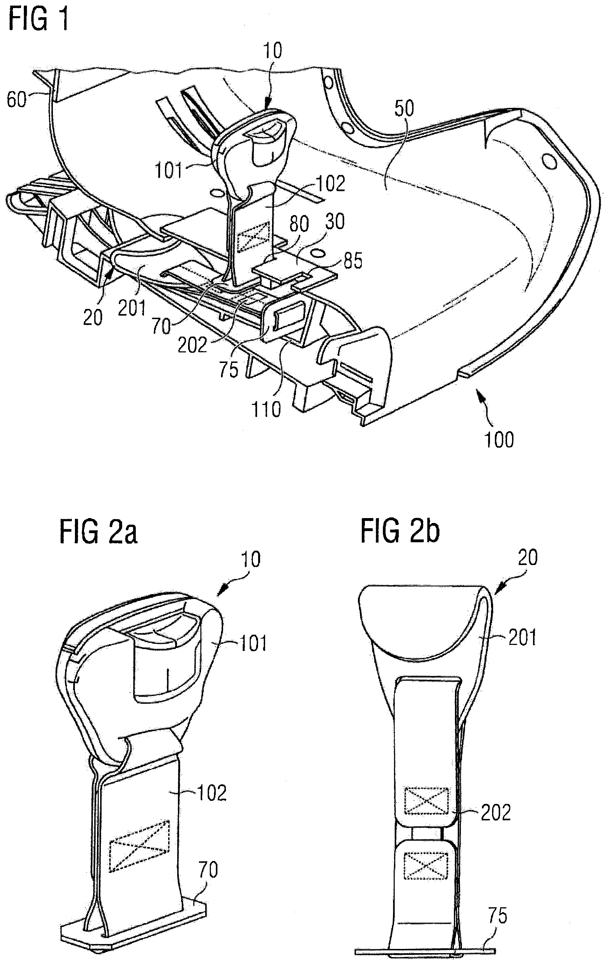

Figure 1 shows a child safety seat 100 equipped with an anchoring system 30 for a safety belt comprising a first coupling device 10 and a second coupling device 20 in accordance with the invention. The child safety seat 100 comprises a seating portion 50 and a backrest 60. The seating portion 50 and the backrest 60 may be separate parts or integrally formed. The anchoring system 30 is installed in the seating portion 50 of the child safety seat 100.

The first coupling device 10 shown in Fig. 1 is a harness buckle intended for use with a harness of the child safety seat 100. The second coupling device 20 is a safety belt clip intended for use with a lap portion of a safety belt of a vehicle seat. The harness and safety belts are not shown in Fig. 1.

The anchoring system 30 further comprises an anchoring means 80, 85 adapted to receive and to anchor the first coupling device 10 and the second anchoring device 20. The anchoring means 80, 85 shown in Fig. 1 is given by a first slot 80 and a second slot 85. The first coupling device 10 shown in Fig. 1 comprises a first engaging element 101 and a first positioning element 102. The details of the first coupling device 10 are described below with respect to Fig. 2a. The first coupling device 10 is attached to a first socket plate 70. The first socket plate 70 ensures that the first coupling device 10 may be firmly anchored in the first slot 80. When anchored in the first slot 80, the first coupling device 10 is in the active position. In said active position, the first coupling device 10 is placed such that the tongues of the harness may be inserted. According to the embodiment shown in Fig. 1, the anchoring of the first coupling device 10 in the first slot 80 is accomplished by hinging the coupling element 10 into the first slot 80. The anchoring system 30 further comprises a second slot 85 for receiving and anchoring the second coupling device 20. The second coupling device 20 comprises a second engaging element 201 and a second positioning element 202. The details of the second coupling device 20 are described below with respect to Fig. 2b. The second coupling device 20 shown in Fig. 1 is stored in the storage system 110. The storage system 110 may be formed as a pocket, recess or cavity in the anchoring system 30. When stored in the storage system 110, the second coupling device 20 is in the inactive position, since in this configuration it is not possible for the second coupling device 20 to engage with the safety belt of the vehicle. The second coupling device 20 is attached to a second socket plate 75. The latter ensures that the second coupling device 20 may be firmly anchored in the second slot 85 of the anchoring means. When placed in the anchoring means, the second coupling device 20 is active. This means, that the second coupling device may engage with the safety belt of a vehicle.

A storage system 110 is provided for storing either the first coupling device 10 or the second coupling device 20 or both. The anchoring system 30 further comprises a lid adapted for covering the storage system.

In order to secure a smaller child with the harness of the child safety seat 100, the first coupling device 10, which in the embodiment shown in Fig. 1 is a harness buckle, is anchored in the first slot 80 of the anchoring means through the socket plate 70. When anchored in the first slot 80, the first coupling device 10 is positioned closer to the backrest 60 of the child safety seat 100 than if it were anchored in the second slot 85. This configuration is particularly adapted for small children. Small children are secured in the child safety seat 100 by the integral harness. The tongues of the integral harness may be inserted in the first coupling device 10. Since small children occupy only a smaller portion of the seating area of the child safety seat's seating portion 50, it makes sense that the first coupling device 10 is placed closer to the backrest 60, thus, closer to the child.

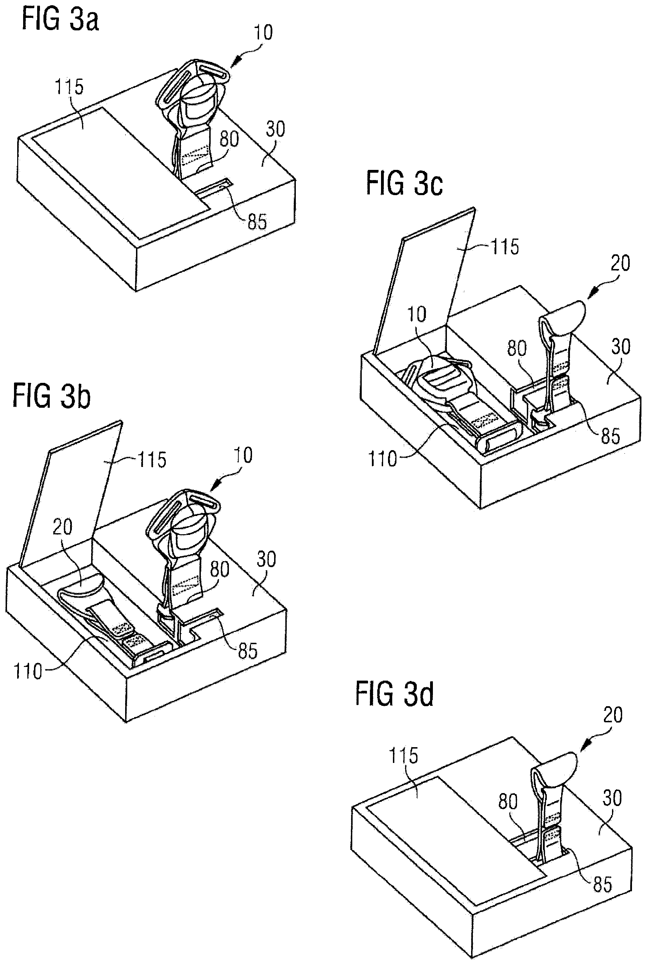

The second coupling device 20 in Fig. 1 is shown in its inactive position. The configuration shown in Fig. 1 corresponds to a child safety seat used for smaller children. However, once the child gets older, it will be necessary to convert the child safety seat into one which is used with the safety belt of the vehicle. Said conversion is described in detail with respect to Figs. 3a-3d below. The second coupling device 20, which in Fig. 1 is shown as a safety belt clip, can be anchored in the second slot 85 rather than in the first slot 80, thus providing more space and flexibility according to size and age of an older child that can use the safety belt of the vehicle seat.

Figure 2a shows the first coupling device 10 of Fig. 1. According to this embodiment, the coupling device 10 comprises a first engaging element 101 and a first positioning element 102. Further a socket plate 70 is shown. The first coupling device 10 is attached to the socket plate 70. In Fig. 2a it is shown that the positioning element 102 is attached to the socket plate 70. The first engaging element 101 is the harness buckle of a harness system. The shown first positioning element 102 is a strap. The positioning element 102 ensures that the first engaging element 101 is placed at proper position for receiving the tongue of the harness. It further ensures that there is not too much play for the first engaging element 101 so that the harness is firmly tightened. Instead of or in addition to a strap, the positioning element 102 may comprise a flexible or rigid element which is adapted to position the engaging element 101 at a distance from the seating portion 50 of the child safety seat 100. This makes the first coupling device 10 more robust. Preferably, the coupling device 10 may be adjustable to different sizes and ages of children. Advantageously, the length of the positioning element 102 is adjustable. The positioning element 102 functions, thus, as an adjustment means. For instance, the length of the strap may be adjusted.

Figure 2b shows the second coupling device 20 of Fig. 1. The second coupling device 20 comprises a second engaging element 201 and a second positioning element 202. Furthermore, it is shown that the second coupling device 20 is attached to a second socket plate 75. The second coupling device 20 is a safety belt clip. The engaging element 201 is adapted to receive the lap portion of a safety belt of a vehicle. The shown engaging element 201 is formed as a hook. The positioning element 202 is configured to position the engaging element 201 at a distance from the seating portion 50 of the child safety seat. The positioning element 202 ensures that the second engaging element 201 is placed at a proper position for receiving the lap portion of the safety belt of a vehicle. The positioning element 202 may comprise a strap, a flexible and/or a rigid element. Using flexible and/or rigid elements which are adapted to position the engaging element 201 at a distance from the seating portion 50 has several advantages. The first advantage is that the safety belt of the vehicle when engaged with the engaging element 201 of the coupling device 20 is properly guided across the pelvic region of the occupant. Second, the insertion of the safety belt into the coupling device 20 is facilitated since it may be accomplished by one hand only. Preferably, the coupling device 20 may be adjustable to different sizes and ages of children.

Advantageously, the length of the positioning element 202 is adjustable. For instance, the length of the strap and/or that of the flexible or rigid element may be adjusted. Preferably, the length of the positioning element 202 of the second coupling device 20 is larger than the length of the positioning element 102 of the first coupling device 10. This is, because the first coupling device 10 is generally used for smaller children, while the second coupling device 20 is generally used for larger children. The positioning element 202 functions, thus, as an adjustment means.

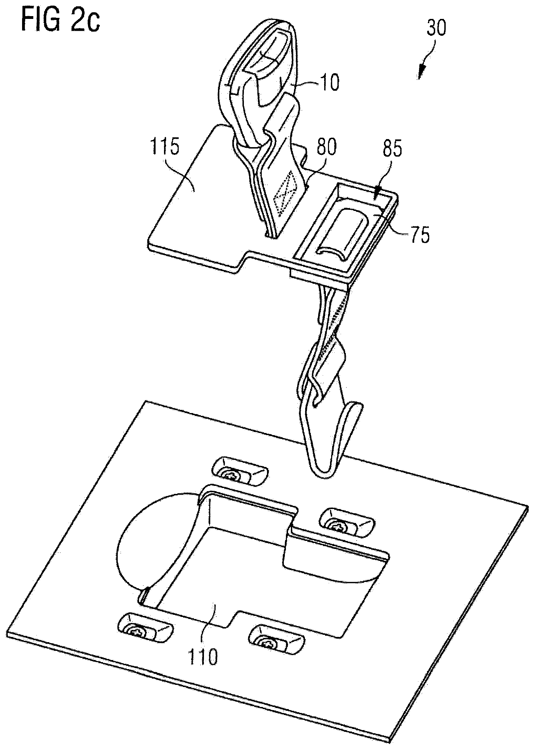

Figure 2c shows a first embodiment of the anchoring system 30 in accordance with the invention. There are shown a storage system 110, a first coupling device 10, a second coupling device 20 and a lid 115 of the storage system 110. The first coupling device 10 shown in Fig. 2c is a harness buckle as described in relation to Fig. 2a. The second coupling device 20 shown in Fig. 2c is a safety belt clip as described in relation to Fig. 2b. The lid 115 serves as an anchoring means for both the first 10 and the second 20 coupling device. The first coupling device 10 is anchored in the first slot 80 of the anchoring means / lid 115. The second coupling device 20 is anchored in the second slot 85 of the anchoring means / lid 115. The first 10 and second 20 coupling devices are anchored to the respective slots 80 and 85 with the help of respective socket plates (in Fig. 2c only the socket plate 75 of the second coupling device 20 is visible). In accordance with this embodiment, the first 10 and the second 20 coupling device are tightly fixed to the anchoring means / lid 115. In other words, the anchoring means / lid 115 couples the first 10 and second 20 coupling device such that the movement of the lid 115 causes the movement of both coupling devices. The lid 115 functions as a coupling mechanism. The first coupling device 10 extends towards one direction from the lid 115, the second coupling device 20 extends towards the opposite direction from the lid 115. The storage system 110 is dimensioned such that it may receive either one of the first 10 and second 20 coupling device.

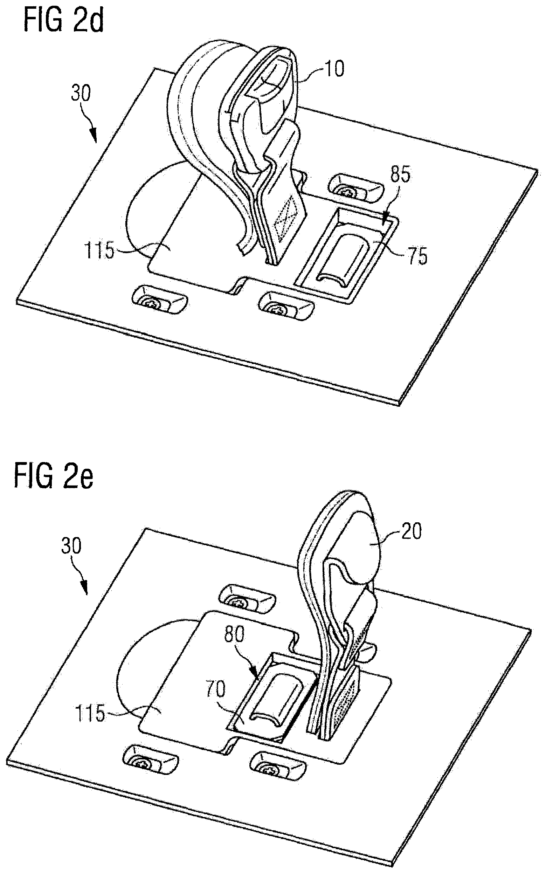

Figure 2d shows the anchoring system 30 in accordance with the first embodiment with the first coupling device 10 in the active position. When placed in this configuration, the first coupling device 10 is ready for receiving the tongue of a harness of a child safety seat. The first coupling device 10 is, therefore, in the active position. The second coupling device (not visible in Fig. 2d) is stored in the storage system. The second coupling device is, thus, in the inactive position. In Fig. 2d only the socket plate 75 which anchors the second coupling device to the second slot 85 of the anchoring means / lid 115 is visible. The storage system is covered by the lid 115. The lid 115, in the closed position, is locked. Therefore, the first coupling device 10 is firmly locked in the active position, too.

Figure 2e shows the anchoring system 30 in accordance with the first embodiment with the second coupling device 20 in the active position. When placed in this configuration, the second coupling device 20 is ready for receiving the lap portion of a safety belt of a vehicle. The second coupling device 20 is, therefore, in the active position. The first coupling device (not visible in Fig. 2e) is stored in the storage system. The first coupling device is, thus, in the inactive position. In Fig. 2e only the socket plate 70 which anchors the first coupling device in the first slot 80 of the anchoring means /I lid 115 is visible. The storage system is covered by the lid 115. The lid 115, in the closed position, is locked. Therefore, the second coupling device 20 is firmly locked in the active position, too.

For transferring the first coupling device 10 from its active position (as shown in Fig. 2d) to it inactive position, causing, at the same time, transferring the second coupling device 20 from its inactive position to its active position (as shown in Fig. 2e) may be done as follows. First, the lid 115 is removed from the storage system 110. This may be accomplished by lifting the lid 115 and/or sliding it backwards. As described above, the first 10 and second 20 coupling device are tightly fixed to the lid 115. Once the lid 115 is removed, the lid 115 may be turned around. When turning around the lid 115 the first 10 and second 20 coupling device interchange their orientations and positions. That is, by simply turning around the lid 115, the first 10 and second 20 coupling device automatically interchange orientations and positions. Afterwards, the lid 115 is closed, e.g., by sliding it along the upper part of the storage system 110 until it is locked. The first coupling device 10 is then stored in the storage system 110. The first coupling device 10 is, thus, in the inactive position. The second coupling device 20 is placed in the active position. Since the first 10 and the second 20 coupling device are coupled to one another by the lid 115, there is always one coupling device in the active and the other in the inactive position. The placement of one coupling device in the active position automatically causes the other coupling device to be placed in the inactive position.

Figures 3a-3d show different configurations of an anchoring system 30 of a second embodiment of the invention. In Fig. 3a first the coupling device 10 is anchored in the first slot 80 of the anchoring means. The second slot 85 is not used in this case. The coupling device 10 comprises a harness buckle. The coupling device 10 is hinged into the slot. When placed in this configuration, the first coupling device 10 is ready for receiving the tongue of a harness of a child safety seat. The first coupling device 10 is, therefore, in the active position. The second coupling device 20 (not visible in Fig. 3a) is stored in the storage system 110. The second coupling device 20 is, thus, in the inactive position. The storage system 110 is covered by a lid 115. The lid 115, in the closed position, is used as a lock for the first coupling device 10 in the active position. That is, the closed lid 115 locks the first 80 and second 85 slot so that the first coupling device 10 is blocked in the first slot 80. In particular, side movement of the coupling device 10, that is, movement out of the first slot 80, is not possible. Fig. 3b shows the anchoring system 30 with an open lid 115. In this configuration, the second coupling device 20 stored in the storage system 110 is visible. Furthermore, the first slot 80 and the second slot 85 are not blocked any more by the lid 115. That is, the first coupling device 10 may be transferred along the first slot 80 of the anchoring means out of its active position. This allows to unhinge the first coupling device 10 from the first slot 80. Fig. 3c shows the anchoring system 30 in a configuration after switching the active and inactive positions of the first coupling device 10 and second coupling device 20. The first coupling device 10 is stored in the storage system 110. The first coupling device 10 is, thus, in the inactive position. The second coupling device 20 is hinged into the second slot 85. The second coupling device is, thus, in the active position. The coupling device 20 shown in Fig. 3c is a safety belt clip. Fig. 3d shows the anchoring system 30 with the second coupling device 20 in the active position. The lid 115 of the storage system 110 is closed. The first coupling device 10 stored in the storage system 110 is, therefore, not visible. The closed lid 115 serves as a lock for the second coupling device 20 inserted in the second slot 85. That is, the closed lid 115 blocks the second coupling device 20 from being removed or loosened from the second slot 85.

Figures 3a-3d show a sequence of steps that may be performed when converting a child safety seat used with the integral harness into a child safety seat used with the safety belt of a vehicle. The anchoring system 30 may be installed in the seating portion of a child safety seat. For converting the child safety seat, a user first opens the closed lid 115 (sequence from Fig. 3a to Fig. 3b). The active first coupling device 10 may then be unhinged from the first slot 80. This may be done by sliding the first coupling device 10 from the stop of the anchoring means out of the first slot 80. Furthermore, the inactive second coupling device 20 is taken out of the storage system 110. The first coupling device 10 is then placed into the storage system 110, thus, it becomes inactive. The first coupling device 10 has, thus, been transferred along the first slot 80 of the anchoring means from the active position to the inactive position. The second coupling device 20 is hinged into the second slot 85 (as shown in Fig. 3b). This may be accomplished by inserting the second coupling device 20 into the second slot 85, and transferring it along the second slot 85 of the anchoring means against its stop. Finally, the lid 115 is closed. This blocks the second coupling device 20 in the second slot 85. Side movement of the second coupling device 20 is suppressed. The second coupling device 20 is now in the active position. It is secured in the anchoring system 30. The conversion of the child safety seat that is used with the safety belt of a vehicle into a child safety seat used with the integral harness may be done by performing the steps described above in reverse order, i.e., with the first and second coupling devices interchanged. The first 10 and second 20 coupling devices are, thus, each transferrable along the anchoring means 80, 85 between the respective active position and the respective inactive position.

It is also shown in Figs. 3a-3d that the anchoring means, e.g., slots 80, 85 are arranged at a distance from one another. The arrangement of the slots 80, 85 is such that when the anchoring system 30 is installed in the seating portion of the child safety seat, the active first coupling device is positioned closer to the backrest of the child safety seat than the active second coupling device. This arrangement of the slots 80, 85 takes into account the different sizes and ages of the children. While the configuration with an active first coupling device 10 is used for smaller children, the configuration with the second coupling device 20 is used for older children. The placement of the second coupling device 20 further distant from the backrest of the child safety seat than the first coupling device 10 gives older children sufficient space on the seating portion of the child safety seat.

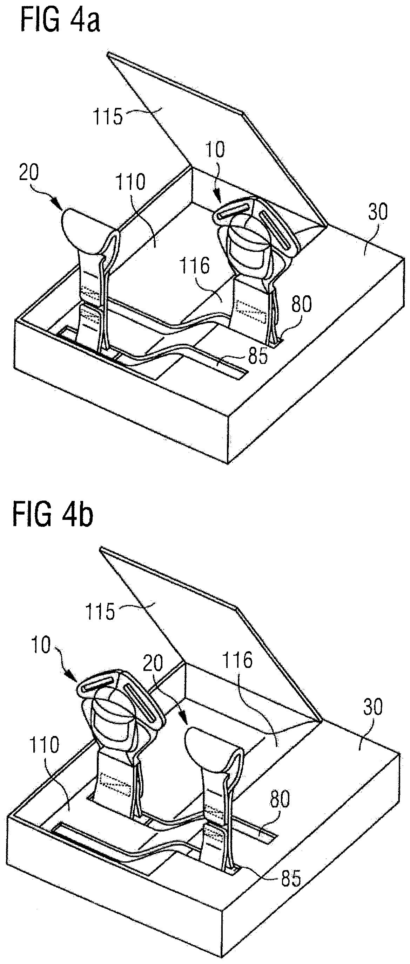

Figures 4a and 4b show a third embodiment of the anchoring system 30 in accordance with the invention. The anchoring system 30 shown in Figs. 4a and 4b differs from the anchoring system of the second embodiment shown in Figs. 1 and 3a-3d in that the anchoring means 80, 85 comprises a rail system with slots that act as rails. The first coupling device 10 is anchored in the first rail 80. The second coupling device 20 is anchored in the second rail 85. The movement of the first 10 and second 20 coupling devices is restricted to the respective rails 80 and 85. The first 10 and second 20 coupling devices are anchored to the respective rails 80 and 85 with the help of respective socket plates 70 and 75. For bringing either of the coupling devices 10, 20 into the active position, the respective coupling device 10 or 20 is moved from the storage system 110 along the slot / rail 80 or 85 until it reaches a position outside the storage system 110. For this, the storage system comprises a ramp shaped exit portion 116. The coupling device 10 or 20 is then in the active position. The other coupling device 10 or 20 is brought into the inactive position as follows. It is moved along the slot / rail 80 or 85 into the storage system 110. The shown storage system 110 has the form of a pocket. The coupling of the coupling device 10 or 20 to the slot / rail 80 or 85 is such that it is possible for it to be rotated, tilted or bent by 90 degrees around an axis parallel to the rail 80 or 85. That is, the anchoring system 30 is configured so that either of the coupling devices may be rotated from an upright position into a horizontal position. This allows to stow the coupling devices 10 or 20 in the storage system 110. The first 10 and second 20 coupling device of the third embodiment may not be disconnected from the anchoring system 30. Because of this, the risk that either of the coupling devices gets lost is highly reduced. The lid 115 may be closed. It serves as a lock for the coupling devices 10 or 20 in their active positions the same as described above in relation to Figs. 3a-3d. The arrangement of the slots / rails 80 and 85 may be the same as that described above in relation to Figs. 3a-3d, i.e., they may be separated by a distance for taking into account the different sizes and ages of the children.

In the embodiment shown in Figs. 4a and 4b and described above the first 10 and second 20 coupling devices are anchored to the respective rails 80 and 85 with the help of respective socket plates 70 and 75. In accordance with the invention, it is, however, also possible that the movement of the socket plates 70, 75 is restricted to a horizontal plane. If the movement of the socket plates 70, 75 is restricted to a horizontal plane the socket plates 70, 75 themselves do not need to be guided over the ramp shaped exit portion 116 of the storage system 110. This has the advantage that the transfer of either of the coupling devices 10, 20 into the active position or back into the inactive position is smoother. The mechanism that restricts the movement of the socket plates 70, 75 to the horizontal plane may be part of the rail system 80, 85.

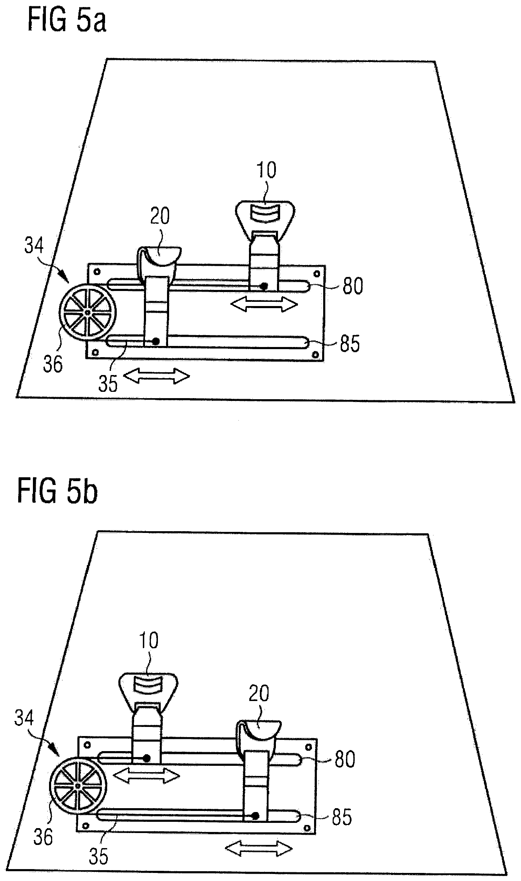

Figures 5a and 5b show a fourth embodiment of the anchoring system 30 of the invention. The embodiment shown in Figs. 5a and 5b differs from the third embodiment described with respect to Figs. 4a and 4b in that the anchoring system 30 further comprises a coupling mechanism 34. The coupling mechanism comprises a belt 35 and a reverse wheel 36. The belt 35 is wound around the wheel 36. One end portion of the belt 35 is linked to the first coupling device 10. A second end portion of the belt 35 is linked to the second coupling device 20. The linkage of the first 10 and second 20 coupling device enables an instant movement of both coupling devices. The movement of one coupling device 10, 20 along the respective slot / rail 80, 85 causes the other coupling device 10, 20 to move along the respective slot / rail 80, 85 in the reverse direction. Figure 5a shows the first coupling device 10 in the active position. In Fig. 5b it is shown that the movement of the second coupling device 20 along the slot / rail 85 out of the storage system has caused the first coupling device 10 to be moved inside the storage system. This prevents that coupling devices 10, 20 are at the same time both in the active or both in the inactive position. Instead of a belt a chain, a thrust or leverage mechanism can be used. When this coupling mechanism is used, it is particularly advantageous if the movement of the socket plates of the coupling devices 10, 20 is restricted to a horizontal plane as described previously.

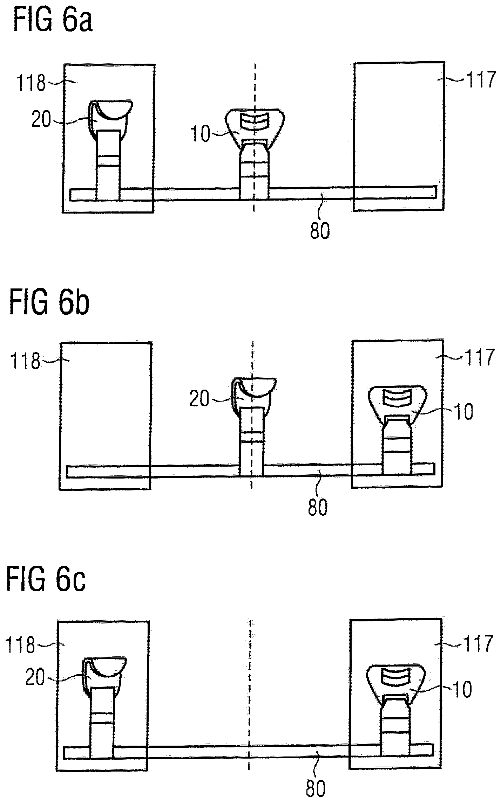

Figures 6a, 6b and 6c show a variant of the anchoring means / rail system and the storage system of the invention. This variant differs from the embodiment described with respect to Figs. 4a and 4b in that only one rail 80 is used. In addition, the storage system comprises two pockets 117, 118. The first pocket 117 is adapted to store the first coupling device 10, the second pocket 118 is adapted to store the second coupling device 20. Figure 6a shows the first coupling device 10 in its active position (indicated by the dashed line). The second coupling device 20 is stored in the second pocket 118. Thus, the second coupling device 20 is in its inactive position. Figure 6b shows the second coupling device 20 in its active position. The first coupling device 10 is stored in the first pocket 117. Thus, the first coupling device 10 is in its inactive position. In Fig. 6c both coupling devices 10, 20 are stored in the respective pockets 117, 118. Thus, both coupling devices are in the inactive positions. The transfer of the coupling devices 10, 20 between the active and the inactive position is done analogously to that described with regard to Figs. 4a and 4b. That is, when in the inactive position, the coupling device is guided along the rail 80 out of the respective pocket until it reaches the active position (as indicated by the dashed lines in Figs. 6a, 6b, 6c). The use of two pockets 117, 118 has the advantage that both coupling devices 10, 20 may be stored at the same time. Therefore, when the child safety seat is used as a highback booster seat for older children, both coupling devices 10, 20 may be securely stowed without the risk that one of them gets lost.

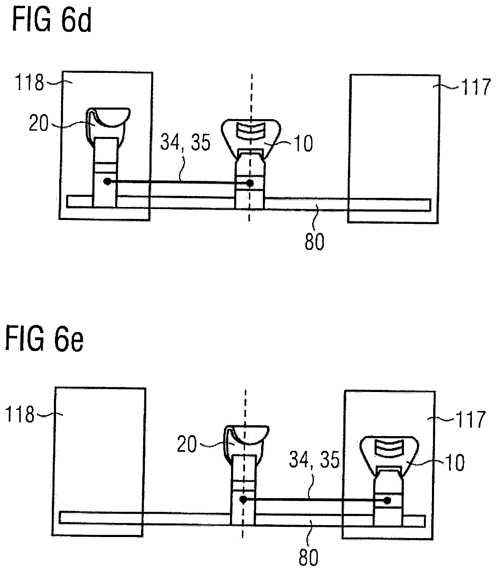

Figures 6d and 6e show the variant of the rail and storage system described before with respect to Figs. 6a, 6b and 6c, i.e., employing one rail 80 and two pockets 117, 118, additionally including a coupling mechanism 34. The coupling mechanism 34 comprises a pull element 35 such as a belt, wire or chain. In Figs. 6d and 6e it is shown that the first 10 and second 20 coupling device are coupled to one another by the coupling mechanism 34, 35. Specifically, in Fig. 6d the first coupling device 10 is in its active position (indicated by the dashed line). The second coupling device 20 is stored in the second pocket 118. Thus, the second coupling device 20 is in its inactive position. In Fig. 6e the positions of the first 10 and second 20 coupling device are interchanged. For the variant with one rail 80 the use of the coupling mechanism 34 is particularly advantageous. Since there is no stop of the rail which places the coupling devices in the correct active position, the coupling mechanism 34 aids the user to find the correct active position. Furthermore, the coupling mechanism 34 may be realized by simple components such as a belt, a wire or a chain. When converting the child safety seat used with the integral harness into a child safety seat used with the safety belt of the vehicle both the first and the second coupling elements 10, 20 are moved into the same direction. That is, no reversion of the belt, wire or chain are necessary, contrary to the coupling mechanism 34 described with regard to Figs. 5a and 5b. Furthermore, owing to the coupling mechanism 34 the movement of one coupling device causes the other coupling device to move. Therefore, the conversion of the child safety seat becomes quicker and easier.

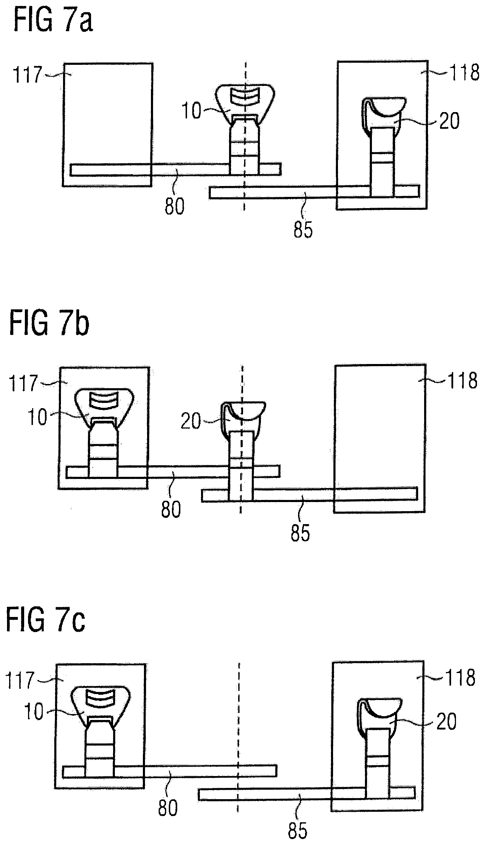

Figures 7a, 7b and 7c show another variant of the anchoring means / rail system and the storage system of the invention. This variant differs from the variant described with regard to Figs. 6a, 6b and 6c in that the rail system comprises two rails 80 and 85. The first rail 80 is adapted to anchor the first coupling device 10. The second rail 85 is adapted to anchor the second coupling device 20. The variant of Figs. 7a, 7b and 7c still comprises a storage system with two pockets 117, 118. That is, a first pocket 17 adapted to store the first coupling device 10; a second pocket 118 adapted to store the second coupling device 20. Figure 7a shows the first coupling device 10 in its active position (indicated by the dashed line). The active position is further indicated in that the first coupling device 10 is placed at the stop of the first rail 80. The second coupling device 20 is stored in the second pocket 118. Thus, the second coupling device 20 is in its inactive position. Figure 7b shows the second coupling device 20 in its active position. The first coupling device 10 is stored in the first pocket 117. Thus, the first coupling device 10 is in its inactive position. In Fig. 7c both coupling devices 10, 20 are stored in the respective pockets 117, 118. Thus, both coupling devices are in the inactive positions. The transfer of the coupling devices 10, 20 between the active and the inactive position is done analogously to that described with regard to Figs. 4a and 4b. That is, when in the inactive position, the coupling device 10, 20 is guided along the respective rail 80, 85 out of the respective pocket 117, 118 until it reaches the respective stop. It has then, reached, the respective active position (as indicated by the dashed lines in Figs. 7a, 7b, 7c). In addition to the advantages mentioned with regard to the variant of Figs. 6a, 6b and 6c, the use of two rails has the advantage that the active position is clearly indicated to the user by the stops of the rails. That is, the correct active position is reached once a coupling device is pushed against the stop of the respective rail. Further, the active position is more stable, since the movement of the coupling device is more restricted. Finally, the arrangement of the rails 80 and 85 may be the same as that described above in relation to Figs. 3a-3d and Figs. 4a and 4b, i.e., they may be separated by a distance for taking into account the different sizes and ages of the children.

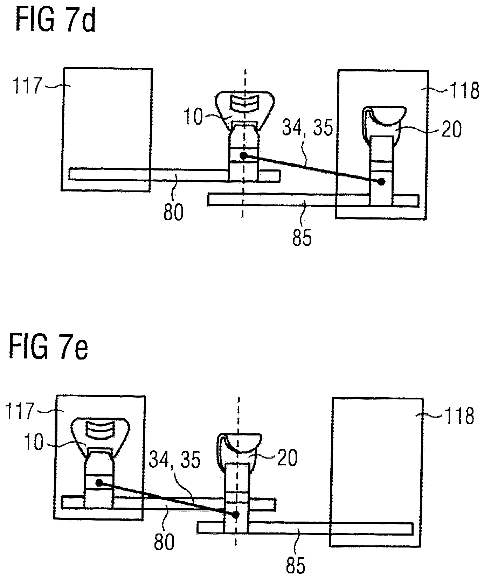

Figures 7d and 7e show the variant of the rail and storage system described before with respect to Figs. 7a, 7b and 7c, i.e., employing two rails 80, 85 and two pockets 117, 118, additionally including a coupling mechanism 34. As in the variant of Figs. 6d and 6e, the coupling mechanism 34 comprises a pull element 35 such as a belt, wire or chain. In Figs. 7d and 7e it is shown that the first 10 and second 20 coupling device are coupled to one another by the coupling mechanism 34, 35. In Fig. 7d the first coupling device 10 is in its active position (indicated by the dashed line). The second coupling device 20 is stored in the second pocket 118. Thus, the second coupling device 20 is in its inactive position. In Fig. 7e the positions of the first 10 and second 20 coupling device are interchanged. The advantages of the coupling mechanism of the variant of Figs. 7d and 7e are the same as those described above in relation to the variant of Figs. 6d and 6e.

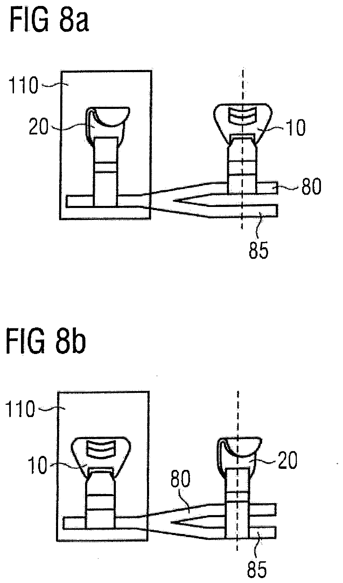

Figures 8a and 8b show a further variant of the anchoring means / rail system and the storage system of the invention. In this variant, the rail system comprises a Y-shaped rail. In other words, the rail system comprises a forked junction. At the junction, a single common rail splits up into a first rail 80 and a second rail 85. The single common rail is adapted to receive the first coupling device 10 and the second coupling device 20. Advantageously, the first rail 80 is adapted to receive and anchor the first coupling device 10; the second rail 85 is adapted to receive and anchor the second coupling device 20. The storage system 110 according to this variant comprises one pocket. The storage system 110 may be adapted to store either of the first 10 or second 20 coupling device. Figure 8a shows the first coupling device 10 in its active position (indicated by the dashed line). The active position is further indicated in that the first coupling device 10 is placed at the stop of the first rail 80. The second coupling device 20 is stored in the storage system 110. Thus, the second coupling device 20 is in its inactive position. Figure 8b shows the second coupling device 20 in its active position. The first coupling device 10 is stored in the storage system 110. Thus, the first coupling device 10 is in its inactive position. The transfer of the coupling devices 10, 20 between the active and the inactive position is accomplished as follows. The coupling device that is stored in the storage system 110 is guided out of the storage system 110 along the rail system. At the fork junction, the coupling device 10, 20 is guided into the respective rail 80, 85 until it reaches the stop of the respective rail 80, 85. If the rails 80, 85 are configured such that the first coupling device 10 may only be received by the first rail 80, and the second coupling device 20 may only be received by the second rail 85, the risk for misplacing the coupling devices is reduced. Furthermore, according to this variant, since only one single common rail leads into the storage system 110, storage place for only either the first 10 or the second 20 coupling device may be given. In this case, the user is forced to use at least one of the coupling devices. This has the advantage that the user is reminded to use one of the coupling devices. The further advantages of this variant are the same as those of the variants employing two separate rails described above in relation to Figs. 4a and 4b and Figs. 7a, 7b and 7c. Finally, the arrangement of the rails 80 and 85 may be the same as that described above in relation to Figs. 3a-3d and Figs. 4a and 4b, i.e., they may be separated by a distance for taking into account the different sizes and ages of the children.

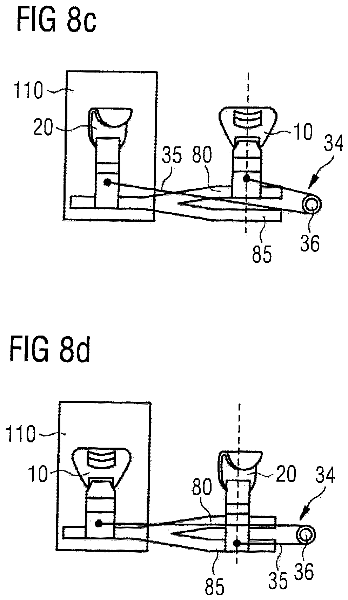

Figures 8c and 8d show the variant of the rail and storage system described before with respect to Figs. 8a and 8b, i.e., employing a Y-shaped rail with a first 80 and a second 85 rail and one pocket, additionally including a coupling mechanism 34. The coupling mechanism 34 corresponds to that described in relation to Figs. 5a and 5b. That is, the coupling mechanism 34 comprises a belt 35 and a reverse wheel 36. As shown in Figs. 8c and 8d, one end of the belt 35 is coupled to the first coupling device 10, the other end of the belt 35 is coupled to the second coupling device 20. By this, the first 10 and second 20 coupling device are coupled to one another. The reverse wheel 36 ensures that the movement of one coupling device in one direction causes the other coupling device to move in the other direction. This reverse movement is necessary since one single pocket is used. In Fig. 8c the first coupling device 10 is in its active position (indicated by the dashed line). The second coupling device 20 is stored in the pocket of the storage system 110. Thus, the second coupling device 20 is in its inactive position. In Fig. 8d the positions of the first 10 and second 20 coupling device are interchanged. The advantages of the coupling mechanism of the variant of Figs. 8c and 8d are the same as those described above in relation to Figs. 5a and 5b.

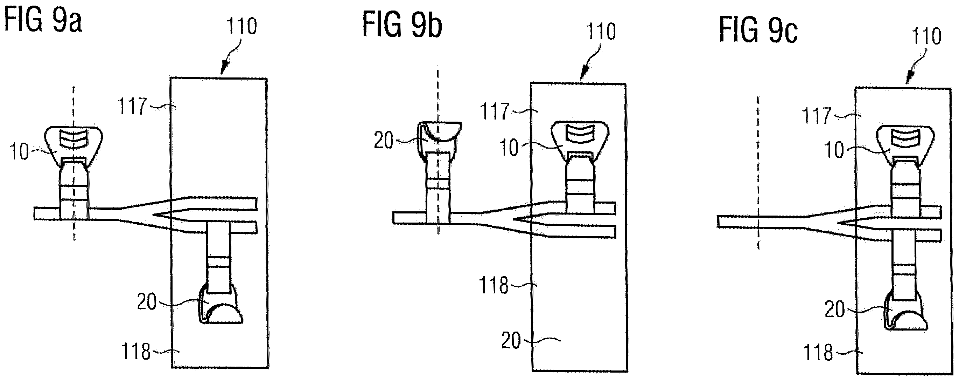

Figures 9a, 9b and 9c show a further variant of the anchoring means / rail system and the storage system of the invention. In this variant, the rail system comprises a Y-shaped rail. With regard to the variant shown in Figs. 8a and 8b, the Y-shaped rail is reversed. That is, there is one single common rail adapted to anchor the first 10 and second 20 coupling device in the active position. There are, however, two rails, each one for receiving, respectively, the first 10 or the second 20 coupling device in the storage system 110. Preferably, the first rail is adapted to receive the first coupling device 10; the second rail is adapted to receive the second coupling device 20. The storage system 110 according to this variant comprises a first pocket 117 and a second pocket 118. The first pocket 117 is adapted to store the first coupling device 10; the second pocket 118 is adapted to store the second coupling device 20. Instead of two pockets, the storage system 110 may comprise a single pocket adapted to store both the first 10 and second 20 coupling device at the same time. Figure 9a shows the first coupling device 10 in its active position (indicated by the dashed line). The active position is further indicated in that the first coupling device 10 is placed at the stop of the single common rail. The second coupling device 20 is stored in the second pocket 118 of the storage system 110. Thus, the second coupling device 20 is in its inactive position. Figure 9b shows the second coupling device 20 in its active position. The second coupling device 20 is placed at the stop of the single common rail. The first coupling device 10 is stored in the first pocket 117 of the storage system 110. Thus, the first coupling device 10 is in its inactive position. In Fig. 9c both coupling devices 10, 20 are stored in the respective pockets 117, 118. Both coupling devices 10, 20 are, thus, in their respective inactive positions.

The transfer of the coupling devices 10, 20 between the active and the inactive position is accomplished as follows. It is assumed that the first coupling device 10 is in its active position and the second coupling device 20 is in its inactive position, as shown in Fig. 9a. The first coupling device 10 is first transferred along the single common rail of the Y-shaped rail until it reaches the fork junction. At the fork junction the first coupling device 10 is further guided along the rail which leads into the first pocket 117. It is preferable that the first coupling device 10 may only be received by the first rail, and the second coupling device 20 may only be received by the second rail of the Y-shaped rail. This facilitates the storing of the coupling devices in the respective pockets. The second coupling device 20 that is stored in the second pocket 118 is guided out of the second pocket 118 along the respective rail of the rail system. At the fork junction, the second coupling device 20 is guided into the single common rail until it reaches the stop. This configuration is shown in Fig. 9b. The case in which the second coupling device is in the active position while the first coupling device is in its inactive position can be treated analogously. Since the storage system comprises two pockets 117, 118, both coupling devices 10, 20 may be stored at the same time, as shown in Fig. 9c. The advantages of providing two pockets are the same as described above in relation to the variants of Figs. 6a, 6b, 6c and Figs. 7a, 7b, 7c.

Figs. 6-9 show variants of the anchoring system / rail system and the storage system which particularly relate to the number and arrangement of rails, and to the number and arrangement of the pockets. It is, therefore, understood that any of the variants of Figs. 6-9 can be used in any of the embodiments described in relation to Figs. 3, 4 and 5, and that all particulars and details which have been described in relation to Figs. 3, 4 and 5 but which have not further been addressed with regard to Figs. 6-9 are fully compatible with and may be used with variants of Figs. 6-9, as well.

The embodiments and variants previously described may be installed or integrated in the seating portion of a child safety seat.

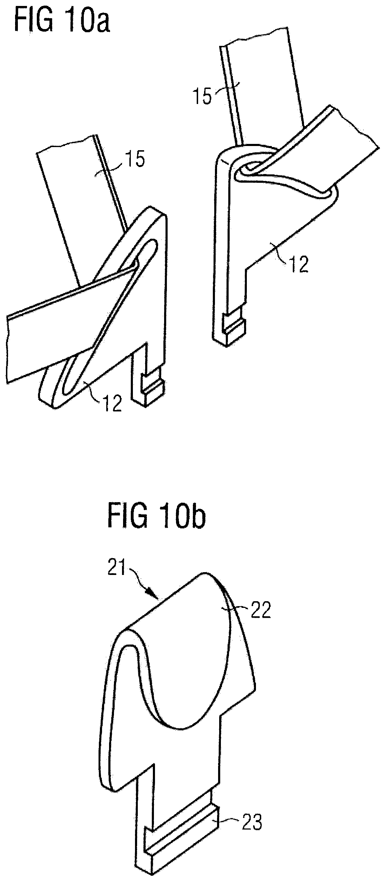

An embodiment according to the second aspect of the invention is described in relation to Figs. 10a and 10b. Figure 10a shows two conventional buckle tongues 12 adapted to engage with a coupling device of a harness system of a child safety seat. The coupling device is preferable a harness buckle. The buckle tongues 12 are attached to the two-strap safety belt 15 of the harness. The coupling device is not shown in Fig. 10a. When the tongues 12 are engaged with the coupling device, the harness is securely fixed. For this, the coupling device may comprise a slot for receiving the tongues 12. For releasing the tongues 12 from the coupling device, the coupling device may comprise a release button. Upon activation, e.g., pressing, of the release button, the tongues 12 may be removed from the coupling device.

Figure 10b shows an insertion tongue 21 according to the invention. The insertion tongue 21 comprises a coupling element 23 and an engaging element 22. The coupling element 23 fits into the slot of the coupling device, such as the harness buckle. The coupling element 23 may be formed as a latch. The coupling element 23 of the insertion tongue 21 is configured such that locking and/or release of the insertion tongue 21 in the coupling device can be accomplished in the same manner as that of the tongues 12. The engaging element 22 is adapted to receive the lap portion of a safety belt of a vehicle. As shown in Fig. 10b, the engaging element 22 may be formed as a hook. The insertion tongue 21 of the invention is adapted to be inserted in the coupling device of a child safety seat. For converting the child safety seat when used with the harness system into a child safety seat to be used with the safety belt of the vehicle, the coupling element 23 is inserted into the slot of the coupling device. The insertion tongue 21 inserted in the coupling device operates as a safety belt clip. No removal of the coupling device is necessary. The conversion is fast and easy. For removing the insertion tongue 21 from the coupling device, the release button of the coupling device is pressed. When the coupling device is used with the integral harness system, the insertion tongue 21 may be attached close to the coupling device. The insertion tongue 21 may be attached to the child safety seat. The insertion tongue 21 may be attached by a wire or a flexible element and/or it may be stored in a storage compartment comprised by the child safety seat. This avoids that the insertion tongue 21 gets lost.

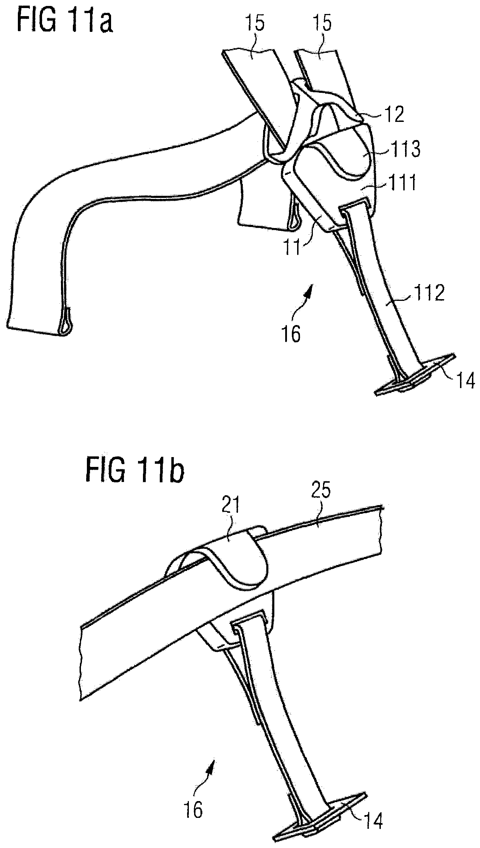

An embodiment in accordance with the third aspect of the invention is shown Figs. 11a and 11b. Fig. 11a shows a combination coupling device 16. The combination coupling device 16 comprises a coupling device 11 and a fixation element 14. Further shown are a tongue 12 of a harness system and two-strap safety belts 15 of the harness. The fixation element 14 is adapted to connect the combination coupling device 16 to the seating portion of child safety seat. The fixation element 14 may comprise a socket plate. Fixation element 14 may also be only a strap that is attached to the seating portion. The coupling device 11 comprises an engaging element 111 and a positioning element 112. The engaging element 111 shown in Fig. 11a is a harness buckle including a hook 113. The harness buckle further comprises a slot. The tongues 12 of the harness system may be inserted in the slot of the harness buckle. The hook 113 is configured to receive and to engage with the lap portion of a vehicle seat. The hook 113 forms the safety belt clip part of the combination coupling device 16. In Fig. 11a the combination coupling device 16 is used with the integral harness system of the child safety seat. The positioning element 112 ensures that the engaging element 111 is placed at a proper position for receiving the tongue 12 of the harness. The positioning element 112 may comprise a strap, and/or a flexible or rigid element which is adapted to position the engaging element 111 at a distance from the seating portion of the child safety seat 100. Advantageously, the length of the positioning element 112 is adjustable. For instance, the length of the strap and/or that of the flexible or rigid element may be adjusted.

In Fig. 11b the combination coupling device 16 already described with respect to Fig. 11a is shown with a safety belt 25 engaged in the hook 113 of the engaging element 111. The tongue 12 of the harness is not used in this configuration. In this configuration, the combination coupling device 16 operates as a safety belt clip. Preferably, the safety belt clip is integrated in the release button of the harness buckle. Preferably, when used as a safety belt clip, the slot of the harness buckle can be covered by a lid (not shown). This protects the open slot from dirt.

By using the combination coupling device 16 in accordance with the invention, the useful life of the child safety seat 100 can be extended while the child gets older, without the need of storing any replacement parts that might get lost over time. The functionality of the harness buckle and of the safety belt clip are integrated in the combination coupling device 16. Therefore, the combination coupling device 16 does not need to be removed or exchanged when converting the child safety seat from the configuration using the integral harness to the configuration using the safety belt of the vehicle. When converting into the configuration using the safety belt of the vehicle, only the harness and the buckle tongues need to be stowed in a respective storing compartment.

A child safety seat comprising the combination coupling device 16 may be configured so that the combination coupling device 16 can be adjusted by linear movement or rotation. This allows for an adjustable positioning of the combination coupling device 16 adapted to the size and age of the occupant of the child safety seat.

The invention may further be described without limitation and by way of example only by the following embodiments. The following embodiments may contain preferred embodiments. Accordingly, the term "clause" as used therein may refer to such a "preferred embodiment".

Clause 1: An anchoring system for a child safety seat comprising
- a first coupling device adapted to engage with a harness of the child safety seat,
- a second coupling device adapted to engage with a safety belt of a vehicle,
- an anchoring means adapted to anchor the first coupling device and the second coupling device, and
- a storage system adapted to store at least one of the first coupling device or the second coupling device,
wherein the first coupling device is configured to be placed in a respective active position and in a respective inactive position, wherein in the active position the first coupling device is anchored by the anchoring means and placed in a position for engaging with the harness of the child safety seat, and wherein in the inactive position the first coupling device is stored in the storage system; wherein the second coupling device is configured to be placed in a respective active position and in a respective inactive position, wherein in the active position the second coupling device is anchored by the anchoring means and placed in a position for engaging with the safety belt of the vehicle, and wherein in the inactive position the second coupling device is stored in the storage system;
wherein the anchoring system is configured to be installed in a seating portion of the child safety seat.

Clause 2: The anchoring system of clause 1, wherein the first coupling device and the second coupling device are coupled by a coupling mechanism such that moving the first coupling device into the active position causes the second coupling device being moved into the inactive position, and vice versa.

Clause 3: The anchoring system of clause 1 or 2, wherein the anchoring means comprises a rail system wherein the first coupling device and the second coupling device are each transferable along the rail system between the respective active position and the respective inactive position.

Clause 4: The anchoring system of clause 3, wherein the rail system comprises a first rail and a second rail, wherein the first rail is adapted to anchor only the first coupling device and the second rail is adapted to anchor only the second coupling device.

Clause 5: The anchoring system of any of the preceding clauses, wherein the first coupling device is a harness buckle adapted to engage with a tongue of the harness of the child safety seat, and the second coupling device is a safety belt clip adapted to engage with a lap portion of the safety belt of the vehicle seat.

Clause 6: The anchoring system of any of the preceding clauses, further comprising at least one lid adapted to cover the storage system, wherein the first coupling device or the second coupling device is locked in the active position when the at least one lid of the storage system is closed.

Clause 7: The anchoring system of clause 2, wherein the coupling mechanism comprises a pull element, in particular a belt, a wire, or chain, or a thrust element or a leverage.

Clause 8: The anchoring system of any of the preceding clauses, wherein the anchoring means is configured such that the active position of the first coupling device is distant from the active position of the second coupling device to accommodate for children of different age and size. Clause 9: The anchoring system of any of the preceding clauses, wherein the coupling devices comprise adjustment means to accommodate children of different age and size.

Clause 10: An insertion tongue, adapted to be inserted into a coupling device for anchoring a harness of a child safety seat, the insertion tongue comprising an engaging element and a coupling element, wherein the engaging element is adapted to engage with the lap portion of a safety belt of a vehicle, and the coupling element is adapted to engage with the coupling device.

Clause 11: The insertion tongue of clause 10, wherein the coupling device is a harness buckle, and the engaging element is configured as a safety belt clip, and the coupling element is configured as a latch adapted to be inserted into the harness buckle.

Clause 12: The insertion tongue of clause 10 or 11, further comprising a flexible element, wherein the insertion tongue is configured to be secured to the child safety seat by the flexible element.

Clause 13: A combination coupling device for a child safety seat comprising
- a fixation element for coupling the combination coupling device to the child safety seat, and
- a coupling device,
wherein the coupling device is adapted to engage with a tongue of a harness system of the child safety seat, and further adapted to engage with a lap portion of a safety belt of a vehicle seat.

Clause 14: The combination coupling device of clause 13, wherein the coupling device is a harness buckle, and wherein the coupling device comprises an integrated hook-shaped safety belt clip adapted to engage with a lap portion of the safety belt of the vehicle seat.

Clause 15: The combination coupling device of clause 14, further comprising a release button for releasing the tongue upon activation, wherein the safety belt clip is integrated in the release button of the harness buckle.

### List of reference numerals

- 10: first coupling device
- 11: harness buckle
- 12: second coupling device
- 14: fixation element
- 15: harness of child safety seat
- 16: combination coupling device
- 20: second coupling device
- 21: insertion tongue
- 22: engaging element of the insertion tongue 21
- 23: coupling element of the insertion tongue 21
- 25: safety belt of a vehicle
- 30: anchoring system
- 34: coupling mechanism
- 35: belt of the coupling mechanism 34
- 36: reverse wheel of the coupling mechanism 34
- 50: seating portion
- 60: backrest
- 70: first socket plate
- 75: second socket plate
- 80: anchoring means / rail system / first slot / first rail
- 85: anchoring means / rail system / second slot / second rail
- 100: child safety seat
- 101: first engaging element
- 102: adjustment means / first positioning element
- 110: storage system
- 111: engaging element of the combination coupling device 16
- 112: positioning element of the combination coupling device 16
- 113: hook of the combination coupling device 16
- 115: lid of storage system 110
- 116: ramp shaped exit portion of the storage system 110
- 117: first pocket of the storage system 110
- 118: second pocket of the storage system 110
- 201: second engaging element
- 202: adjustment means / second positioning element

## Claims

1. An anchoring system (30) for a child safety seat (100) comprising
- a first coupling device (10) adapted to engage with a harness of the child safety seat (100),
- a second coupling device (20) adapted to engage with a safety belt of a vehicle,
- an anchoring means (80, 85) adapted to anchor the first coupling device (10) and the second coupling device (20), and
- a storage system (110) adapted to store at least one of the first coupling device (10) or the second coupling device (20),
wherein the first coupling device (10) is configured to be placed in a respective active position and in a respective inactive position, wherein in the active position the first coupling device (10) is anchored by the anchoring means (80, 85) and placed in a position for engaging with the harness of the child safety seat, and wherein in the inactive position the first coupling device (10) is stored in the storage system (110);
wherein the second coupling device (20) is configured to be placed in a respective active position and in a respective inactive position, wherein in the active position the second coupling device (20) is anchored by the anchoring means (80, 85) and placed in a position for engaging with the safety belt of the vehicle, and wherein in the inactive position the second coupling device (20) is stored in the storage system (110);
wherein the anchoring system (30) is configured to be installed in a seating portion (50) of the child safety seat (100),
wherein the anchoring means comprises a rail system (80, 85) wherein the first coupling device (10) and the second coupling device (20) are each transferable along the rail system between the respective active position and the respective inactive position.

2. The anchoring system (30) of claim 1, wherein the first coupling device (10) and the second coupling device (20) are coupled by a coupling mechanism (34) such that moving the first coupling device (10) into the active position causes the second coupling device (20) being moved into the inactive position, and vice versa.

3. The anchoring system (30) of claim 1 or 2, wherein the rail system (80, 85) comprises a first rail (80) and a second rail (85), wherein the first rail (80) is adapted to anchor only the first coupling device (10) and the second rail (85) is adapted to anchor only the second coupling device (20).

4. The anchoring system (30) of any of the preceding claims, wherein the first coupling device (10) is a harness buckle adapted to engage with a tongue of the harness of the child safety seat (100), and the second coupling device (20) is a safety belt clip adapted to engage with a lap portion of the safety belt (25) of the vehicle seat.

5. The anchoring system (30) of any of the preceding claims, further comprising at least one lid (115) adapted to cover the storage system (110), wherein the first coupling device (10) or the second coupling device (20) is locked in the active position when the at least one lid (115) of the storage system (110) is closed.

6. The anchoring system (30) of claim 2, wherein the coupling mechanism (34) comprises a pull element (35), in particular a belt, a wire, or chain, or a thrust element or a leverage.

7. The anchoring system (30) of any of the preceding claims, wherein the anchoring means (80, 85) is configured such that the active position of the first coupling device (10) is distant from the active position of the second coupling device (20) to accommodate for children of different age and size.

8. The anchoring system (30) of any of the preceding claims, wherein the coupling devices (10, 20) comprise adjustment means (102, 202) to accommodate children of different age and size.

## Patentansprüche

1. Verankerungssystem (30) für einen Kindersitz (100), umfassend:
- eine erste Verbindungsvorrichtung (10), dazu ausgelegt, mit einem Gurt des Kindersitzes (100) in Eingriff zu gelangen,
- eine zweite Verbindungsvorrichtung (20), dazu ausgelegt, mit einem Sicherheitsgurt eines Fahrzeugs in Eingriff zu gelangen,
- ein Verankerungsmittel (80, 85), dazu ausgelegt, die erste Verbindungsvorrichtung (10) und die zweite Verbindungsvorrichtung (20) zu verankern, und
ein Verwahrungssystem (110), dazu ausgelegt, mindestens eine aus der ersten Verbindungsvorrichtung (10) oder der zweiten Verbindungsvorrichtung (20) zu verwahren,
wobei die erste Verbindungsvorrichtung (10) dazu konfiguriert ist, in einer jeweiligen aktiven Position und in einer jeweiligen inaktiven Position platziert zu sein, wobei die erste Verbindungsvorrichtung (10) in der aktiven Position durch das Verankerungsmittel (80, 85) verankert und in einer Position zum Eingreifen mit dem Gurt des Kindersitzes platziert ist, und wobei die erste Verbindungsvorrichtung (10) in der inaktiven Position in dem Verwahrungssystem (110) verwahrt ist;
wobei die zweite Verbindungsvorrichtung (20) dazu konfiguriert ist, in einer jeweiligen aktiven Position und in einer jeweiligen inaktiven Position platziert zu sein, wobei die zweite Verbindungsvorrichtung (20) in der aktiven Position durch das Verankerungsmittel (80, 85) verankert und in einer Position zum Eingreifen mit dem Sicherheitsgurt des Fahrzeugs platziert ist, und wobei die zweite Verbindungsvorrichtung (20) in der inaktiven Position in dem Verwahrungssystem (110) verwahrt ist;
wobei das Verankerungssystem (30) dazu konfiguriert ist, in einem Sitzabschnitt (50) des Kindersitzes (100) installiert zu sein,
wobei das Verankerungsmittel ein Schienensystem (80, 85) umfasst, wobei die erste Verbindungsvorrichtung (10) und die zweite Verbindungsvorrichtung (20) jeweils entlang des Schienensystems zwischen der jeweiligen aktiven Position und der jeweiligen inaktiven Position überführbar sind.

2. Verankerungssystem (30) nach Anspruch 1, wobei die erste Verbindungsvorrichtung (10) und die zweite Verbindungsvorrichtung (20) durch einen Verbindungsmechanismus (34) so verbunden sind, dass ein Bewegen der ersten Verbindungsvorrichtung (10) in die aktive Position ein Bewegen der zweiten Verbindungsvorrichtung (20) in die inaktive Position veranlasst, und umgekehrt.

3. Verankerungssystem (30) nach Anspruch 1 oder 2, wobei das Schienensystem (80, 85) eine erste Schiene (80) und eine zweite Schiene (85) umfasst, wobei die erste Schiene (80) dazu ausgelegt ist, nur die erste Verbindungsvorrichtung (10) zu verankern, und die zweite Schiene (85) dazu ausgelegt ist, nur die zweite Verbindungsvorrichtung (20) zu verankern.

4. Verankerungssystem (30) nach einem der vorangehenden Ansprüche, wobei die erste Verbindungsvorrichtung (10) ein Gurtverschluss ist, dazu ausgelegt, mit einer Zunge des Gurtes des Kindersitzes (100) in Eingriff zu gelangen, und die zweite Verbindungsvorrichtung (20) eine Sicherheitsgurtklammer ist, dazu ausgelegt, mit einem Beckenabschnitt des Sicherheitsgurtes (25) des Fahrzeugsitzes in Eingriff zu gelangen.

5. Verankerungssystem (30) nach einem der vorangehenden Ansprüche, ferner umfassend mindestens einen Deckel (115), dazu ausgelegt, das Verwahrungssystem (110) abzudecken, wobei die erste Verbindungsvorrichtung (10) oder die zweite Verbindungsvorrichtung (20) in der aktiven Position verriegelt ist, wenn der mindestens eine Deckel (115) des Verwahrungssystems (110) geschlossen ist.

6. Verankerungssystem (30) nach Anspruch 2, wobei der Verbindungsmechanismus (34) ein Zugelement (35) umfasst, insbesondere ein Band, ein Seil oder eine Kette, oder ein Schubelement oder einen Hebel.

7. Verankerungssystem (30) nach einem der vorangehenden Ansprüche, wobei das Verankerungsmittel (80, 85) so konfiguriert ist, dass die aktive Position der ersten Verbindungsvorrichtung (10) von der aktiven Position der zweiten Verbindungsvorrichtung (20) beabstandet ist, um Kinder unterschiedlichen Alters und unterschiedlicher Größe aufzunehmen.

8. Verankerungssystem (30) nach einem der vorangehenden Ansprüche, wobei die Verbindungsvorrichtungen (10, 20) Verstellmittel (102, 202) umfassen, um Kinder unterschiedlichen Alters und unterschiedlicher Größe aufzunehmen.

## Revendications

1. Système d'ancrage (30) pour siège de sécurité enfant (100) comprenant
- un premier dispositif de couplage (10) adapté pour se mettre en prise avec un harnais du siège de sécurité enfant (100),
- un second dispositif de couplage (20) adapté pour se mettre en prise avec une ceinture de sécurité d'un véhicule,
- un moyen d'ancrage (80, 85) adapté pour ancrer le premier dispositif de couplage (10) et le second dispositif de couplage (20), et
- un système de stockage (110) adapté pour stocker au moins l'un parmi le premier dispositif de couplage (10) ou le second dispositif de couplage (20),
dans lequel le premier dispositif de couplage (10) est conçu pour être placé dans une position active respective et dans une position inactive respective, où, dans la position active, le premier dispositif de couplage (10) est ancré par le moyen d'ancrage (80, 85) et placé dans une position pour se mettre en prise avec le harnais du siège de sécurité enfant, et où, dans la position inactive, le premier dispositif de couplage (10) est stocké dans le système de stockage (110) ;
dans lequel le second dispositif de couplage (20) est conçu pour être placé dans une position active respective et dans une position inactive respective, où, dans la position active, le second dispositif de couplage (20) est ancré par le moyen d'ancrage (80, 85) et placé dans une position pour se mettre en prise avec la ceinture de sécurité du véhicule, et où, dans la position inactive, le second dispositif de couplage (20) est stocké dans le système de stockage (110) ;
dans lequel le système d'ancrage (30) est conçu pour être installé dans une partie d'assise (50) du siège de sécurité enfant (100),
dans lequel le moyen d'ancrage comprend un système de rail (80, 85), où le premier dispositif de couplage (10) et le second dispositif de couplage (20) sont chacun transférable le long du système de rail entre la position active respective et la position inactive respective.

2. Système d'ancrage (30) selon la revendication 1, dans lequel le premier dispositif de couplage (10) et le second dispositif de couplage (20) sont accouplés par un mécanisme de couplage (34) tel que le déplacement du premier dispositif de couplage (10) dans la position active fait en sorte que le second dispositif de couplage (20) se déplace dans la position inactive, et vice versa.

3. Système d'ancrage (30) selon la revendication 1 ou la revendication 2, dans lequel le système de rail (80, 85) comprend un premier rail (80) et un second rail (85), où le premier rail (80) est adapté pour ancrer uniquement le premier dispositif de couplage (10) et le second rail (85) est adapté pour ancrer uniquement le second dispositif de couplage (20).

4. Système d'ancrage (30) selon l'une quelconque des revendications précédentes, dans lequel le premier dispositif de couplage (10) est une boucle de harnais adaptée pour se mettre en prise avec une languette du harnais du siège de sécurité enfant (100) et le second dispositif de couplage (20) est un clip de ceinture de sécurité adapté pour se mettre en prise avec une partie abdominale de la ceinture de sécurité (25) du siège de véhicule.

5. Système d'ancrage (30) selon l'une quelconque des revendications précédentes, comprenant en outre au moins un couvercle (115) adapté pour recouvrir le système de stockage (110), où le premier dispositif de couplage (10), ou le second dispositif de couplage (20), est verrouillé dans la position active lorsque l'au moins un couvercle (115) du système de stockage (110) est fermé.

6. Système d'ancrage (30) selon la revendication 2, dans lequel le mécanisme de couplage (34) comprend un élément à tirer (35) en particulier, une ceinture, un fil, ou une chaîne, ou un élément de poussée ou un levier.

7. Système d'ancrage (30) selon l'une quelconque des revendications précédentes, dans lequel le moyen d'ancrage (80, 85) est conçu de sorte que la position active du premier dispositif de couplage (10) est distante de la position active du second dispositif de couplage (20) pour s'accommoder pour des enfants d'âge et de taille différents.

8. Système d'ancrage (30) selon l'une quelconque des revendications précédentes, dans lequel les dispositifs de couplage (10, 20) comprennent des moyens de réglage (102, 202) pour s'accommoder pour des enfants d'âge et de taille différents.
